Europäisches Patentamt

European Patent Office

Office européen des brevets

(19)

(11) Numéro de publication : **0 109 336 B1**

# (12) FASCICULE DE BREVET EUROPÉEN

(45) Date de publication du fascicule du brevet :
15.04.87

(21) Numéro de dépôt : 83402157.8

(22) Date de dépôt : 07.11.83

(51) Int. Cl.⁴ : **H 02 H   9/06**

(54) Dispositif de protection contre les surtensions.

(30) Priorité : 10.11.82 FR 8218868

(43) Date de publication de la demande :
23.05.84 Bulletin 84/21

(45) Mention de la délivrance du brevet :
15.04.87 Bulletin 87/16

(84) Etats contractants désignés :
AT BE CH DE GB LI NL SE

(56) Documents cités :
EP-A- 0 041 098
CH-A-   421 256
DE-A- 1 941 655
DE-A- 2 840 900

(73) Titulaire : Hamelin, Joel
Keryann
F-22700 Louannec (FR)

Guena, Jean
30 Cité Morgane
F-22560 Trebeurden (FR)

(72) Inventeur : Hamelin, Joel
Keryann
F-22700 Louannec (FR)
Inventeur : Guena, Jean
30 Cité Morgane
F-22560 Trebeurden (FR)

(74) Mandataire : Mongrédien, André et al
c/o BREVATOME 25, rue de Ponthieu
F-75008 Paris (FR)

Jouve, 18, rue St-Denis, 75001 Paris, France

EP 0 109 336 B1

**0 109 336**

## Description

La présente invention est relative à un dispositif de protection contre les surtensions et trouve une application particulièrement intéressante pour la protection contre la foudre des systèmes raccordés à des câbles coaxiaux.

Il existe à l'heure actuelle de nombreux dispositifs de protection contre les surtensions et notamment de protection contre la foudre. Par exemple, la publication FR-A-2 436 520 décrit un système comportant un parafoudre disposé entre un premier conducteur et la masse, une inductance montée en série avec le premier conducteur et un condensateur qui relie l'inductance à la masse, formant ainsi une cellule inductance capacité.

Une telle réalisation concerne cependant une application spécifique, à savoir la protection des lignes haute tension à basse fréquence. Le but d'un tel dispositif est d'être efficace contre les ondes progressives de fréquence élevée en empêchant leur propagation le long de la ligne. A cet effet, la cellule inductance-capacité constitue un filtre passe-bas. Ce document insiste sur le fait qu'un tel filtre passe-bas n'oppose aucune résistance au transport d'énergie à des fréquences situées entre 16 2/3 et 60 Hz, mais qu'il agit comme un barrage pour les ondes progressives dont la fréquence est supérieure de plusieurs ordres de grandeur. La valeur de la capacité utilisée doit être relativement importante.

Le document EP-A1-0 041 098 décrit un dispositif du même type destiné à protéger une ligne coaxiale. Ce dispositif comporte un parafoudre disposé entre la ligne coaxiale et la masse, une inductance montée en série avec la ligne coaxiale et un condensateur reliant l'inductance à la masse, formant ainsi une cellule en $\pi$, les jambes du $\pi$ étant constituées par le parafoudre et le condensateur, l'inductance étant connectée entre le parafoudre et le condensateur.

Le document CH-A-421 256 décrit également un dispositif de protection contre les surtensions comprenant un parafoudre, des inductances et des capacités. Une des extrémités de l'appareil à protéger est reliée à la masse par un condensateur et l'autre à une inductance elle-même connectée à un éclateur. Ce dernier est relié à la ligne d'alimentation par un condensateur. Ce document indique également que l'on peut choisir les valeurs des inductances et capacités utilisées de façon à obtenir l'impédance caractéristique de la ligne d'alimentation.

Contrairement au dispositif dans la publication FR-A-2 436 520, la présente invention a pour objet un dispositif de protection contre les surtensions capable de fonctionner dans une large gamme de fréquences, de l'ordre de grandeur de celles qui sont habituellement véhiculées dans les câbles coaxiaux.

Dans les systèmes raccordés à des câbles coaxiaux, le montage d'un élément parasurtension ou parafoudre a pour résultat l'introduction d'une capacité.

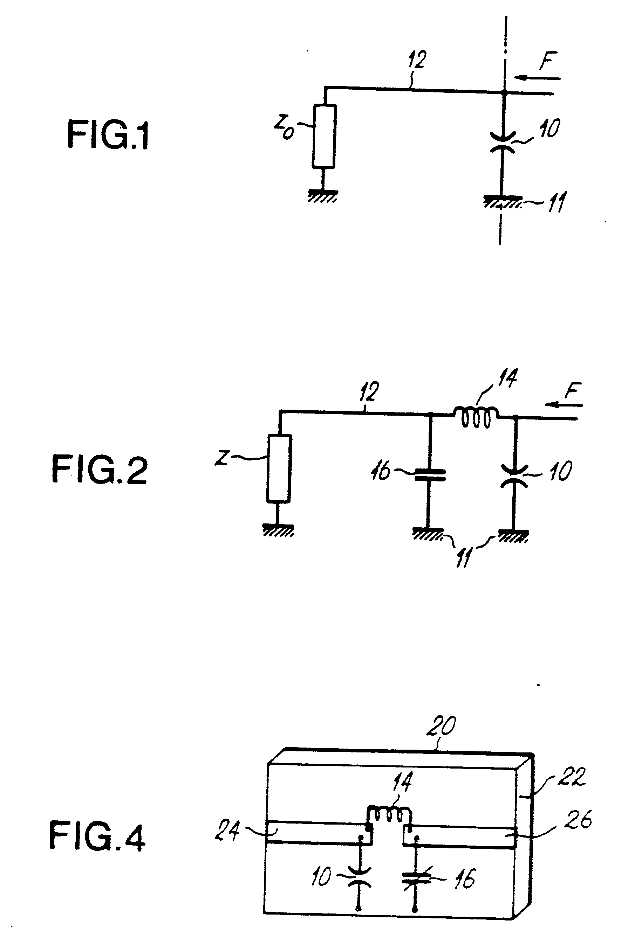

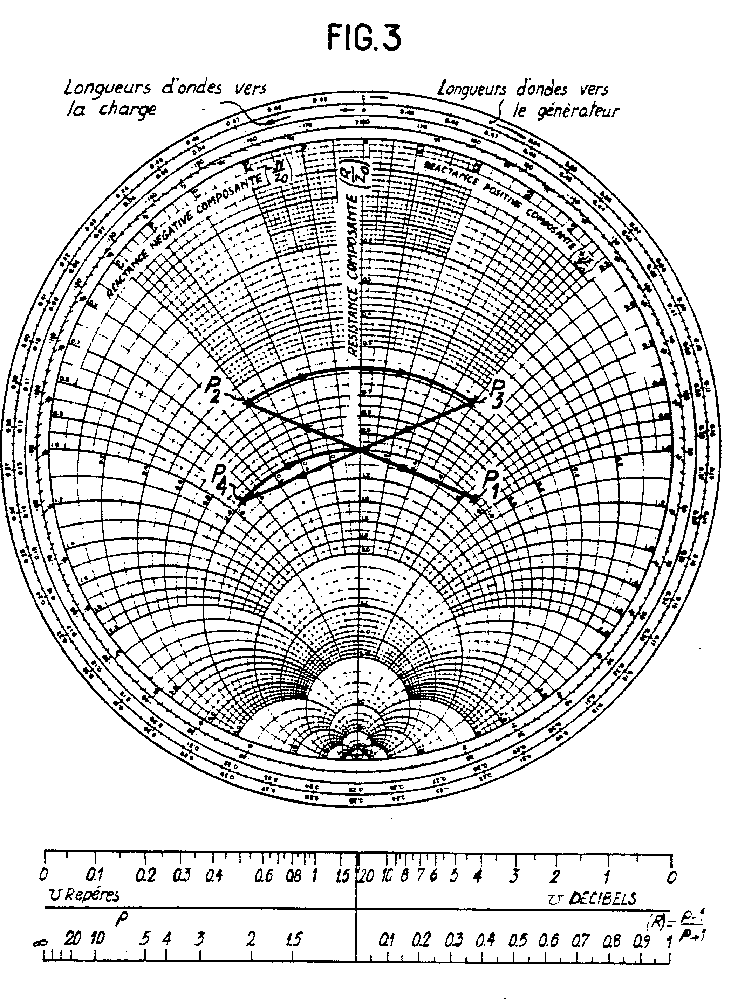

La figure 1 illustre la configuration électrique résultante sur une ligne. Le parafoudre 10, qui est généralement constitué par un éclateur à gaz, est placé en parallèle sur une ligne 12 d'impédance caractéristique $Z_0$ (50 ohms par exemple). Le parafoudre introduit donc dans le circuit électrique une capacité C d'une valeur de quelques picofarads. L'admittance vue dans le plan du parafoudre est :

$$Y = Y_0 + jC\omega \qquad (1)$$

ou

$$Y = 1 + jC\omega/Y_0 \qquad (2)$$

en admittance réduite, la ligne étant terminée par une charge égale à son impédance caractéristique (la flèche F indique le sens d'écoulement du signal). On peut déduire des équations (1) ou (2) que la présence de l'élément parasurtension (10) a pour effet une désadaptation réactive qui est d'autant plus importante que la fréquence est élevée.

Le but de la présente invention est de proposer un dispositif de protection contre les surtensions qui ne perturbe pas les ondes hyperfréquences qui le traversent.

Selon la principale caractéristique de ce dispositif, celui-ci, du type comportant un parafoudre disposé entre un premier conducteur et la masse, une inductance montée en série avec le premier conducteur et un condensateur qui relie l'inductance à la masse formant ainsi une cellule en $\pi$, les jambes du $\pi$ étant constituées par le parafoudre et le condensateur, l'inductance étant connectée entre le parafoudre et le condensateur, se caractérise en ce que la capacité du condensateur est égale à la capacité du parafoudre.

Suivant une autre caractéristique de ce dispositif, la capacité dudit condensateur est adjustable.

Le dispositif objet de l'invention peut être réalisé suivant différentes techniques et notamment les techniques à microrubans, triplaque et coaxiale.

Enfin, selon une dernière caractéristique de ce dispositif, la tension de claquage du condensateur est supérieure à la tension d'amorçage du parafoudre.

L'invention apparaîtra mieux à la lecture de la description qui va suivre, donnée à titre purement illustratif et nullement limitatif, en référence aux dessins annexés, dans lequels :

la figure 1, déjà décrite, est un schéma électrique équivalent d'un système coaxial équipé d'un

2

parafoudre,

la figure 2 est un schéma de principe d'un dispositif de protection selon l'invention,

la figure 3 est un abaque de Smith illustrant la compensation réalisée grâce au dispositif de l'invention, et

la figure 4 est une vue schématique d'un mode de réalisation de l'invention selon la méthode dite « microruban ».

La figure 2 représente un dispositif semblable à celui de la figure 1 auquel on a ajouté une cellule inductance-capacité, en aval du parafoudre 10 par rapport au sens d'écoulement du signal (flèche F). Cette cellule se compose d'une inductance 14 montée en série avec le conducteur 12 et d'un condensateur 16 monté entre le conducteur 12, en un point situé en aval de l'inductance 14, et la masse 11. On obtient ainsi une cellule en $\pi$ formée par les composants 10, 14 et 16, les jambes du $\pi$ étant constituées par le parafoudre 10 et le condensateur 16.

L'abaque de Smith représenté sur la figure 3 permet de vérifier que le fait d'avoir choisi, conformément à l'invention, des valeurs sensiblement égales pour les capacités du condensateur 16 et du parafoudre 10 permet de supprimer pratiquement la désadaptation réactive introduite par ce dernier. Sur l'abaque référencé en admittance, le point $P_1$ représente l'admittance réduite. En prenant comme hypothèse que C, capacité du parafoudre, est égale à 3 pF et que $Z_0$ est égale à 50 ohms, on a pour valeur de la fréquence de 900 MHz (valeur où la compensation doit être optimale) :

$$y = 1 + jC\omega/Y_0 = 1 + j \times 3 \cdot 10^{-12} \cdot 2\pi \cdot 9 \cdot 10^8 \cdot 50 \qquad (3)$$

$$y = 1 + j \times 0,85 \qquad (4)$$

L'équation (4) permet de déterminer sur l'abaque référencé en admittance le point $P_1$ qui représente l'admittance réduite en l'absence de compensation (c'est-à-dire dans le cas de la figure 1).

Pour réaliser la compensation, c'est-à-dire pour ramener le point représentatif au centre de l'abaque, on référence d'abord l'attaque en impédance : le point représentatif est alors $P_2$ symétrique de $P_1$ par rapport au centre de l'abaque.

La position du point $P_2$ est donnée par l'équation (5) :

$$z = 0,58 - j\ 0,48 \qquad (5)$$

Une inductance série permet d'amener le point $P_2$ en $P_3$ par une rotation R = constante. Le point $P_3$ est symétrique du point $P_2$ par rapport à l'axe réel, de manière à ce que l'on puisse se retrouver sur le cercle R = 1 lorsque l'on repasse en admittance.

La position du point $P_3$ est donnée par l'équation (6) :

$$z = 0,58 + J\ 0,48 \qquad (6)$$

ce qui veut dire que l'on a ajouté la réactance :

$$j\ L\omega/Z_0 = j\ 0,96 \qquad (7)$$

soit

$$L = 0,96 \times 50/2\pi \cdot 9 \cdot 10^8 = 8,5\ nH$$

Si l'on repasse en admittance, on se retrouve au point $P_4$, symétrique de $P_3$ par rapport au centre de l'abaque. On termine ensuite l'adaptation en rajoutant $jC\omega/Y_0$ de manière à se retrouver au centre de l'abaque. Etant donné que la position du point $P_4$ est donnée par l'équation :

$$y = 1 - j \times 0,85 \qquad (8)$$

on voit en comparant les équations (4) et (8) que, si on donne à la capacité $C_1$ du condensateur 16 la même valeur que la capacité c du parafoudre 10 (c'est-à-dire 3 pF dans l'exemple décrit ici), on obtient bien l'adaptation recherchée.

Le dispositif ainsi obtenu présente donc à l'entrée et à la sortie la même impédance que l'impédance caractéristique du coaxial auquel il est relié. En outre, la tension de claquage de la capacité est choisie de manière à être supérieure à la tension d'amorçage de l'élément protecteur (parafoudre).

Sur le plan pratique, on a réalisé un dispositif de protection conforme à l'invention mettant en œuvre la technique connue en soi dite « microruban » (« microstrip » en terminologie anglo-saxonne). Un tel mode de réalisation est représenté sur la figure 4. Le dispositif comporte alors une plaque de masse arrière 20 recouverte par un diélectrique 22. Sur le diélectrique sont déposées les lignes de transmission d'entrée 24 et de sortie 26 toutes deux constituées par des microrubans. Entre les lignes de transmission d'entrée 24 et de sortie 26 est implantée la cellule en $\pi$ constituée par le parafoudre 10, l'inductance 14 et

3

le condensateur 16. La capacité de ce dernier a une valeur voisine de celle du parafoudre et est variable afin de permettre un ajustement précis au cours du réglage initial du dispositif. D'autre part, chaque ligne de transmission comporte une terminaison coaxiale afin de permettre les raccordements. Enfin, pour des raisons de sécurité, on choisit le condensateur 16 de sorte que sa tension de claquage soit supérieure à la tension d'amorçage du parafoudre 10.

Bien entendu, d'autres montages que le microruban sont possibles, et l'invention s'applique également à des montages triplaque ou coaxiaux.

Bien que l'invention ait été décrite dans le cadre d'une application où l'impédance caractéristique est égale à 50 ohms, il va de soi que l'invention est tout également applicable pour des valeurs différentes de cette impédance caractéristique. Dans tous les cas, l'ensemble en π ainsi obtenu permet de réaliser un système adapté du continu aux hautes fréquences, sans perte notoire de transmission.

## Revendications

1. Dispositif de protection contre les surtensions, du type comportant un parafoudre (10) disposé entre un premier conducteur (12) et la masse (11), une inductance (14) montée en série avec le premier conducteur (12) et un condensateur (16) qui relie l'inductance (14) à la masse (11) formant ainsi une cellule en π, les jambes du π étant constituées par le parafoudre et le condensateur, l'inductance étant connectée entre le parafoudre et le condensateur, caractérisé en ce que la capacité du condensateur (16) est égale à la capacité du parafoudre (10).

2. Dispositif de protection selon la revendication 1, caractérisé en ce que la capacité du condensateur (16) de ladite cellule est ajustable.

3. Dispositif selon l'une quelconque des revendications 1 et 2, caractérisé en ce qu'il est réalisé selon la technique microruban.

4. Dispositif selon l'une quelconque des revendications 1 et 2, caractérisé en ce qu'il est réalisé selon une technique triplaque.

5. Dispositif selon l'une quelconque des revendications 1 et 2, caractérisé en ce qu'il est réalisé selon une technique coaxiale.

6. Dispositif selon l'une quelconque des revendications 1 à 5, caractérisé en ce que la tension de claquage du condensateur (16) est supérieure à la tension d'amorçage du parafoudre (10).

## Claims

1. Device for protection against surge voltages, of the type comprising a lightning arrester (10) disposed between a first conductor (12) and earth (11), an inductance (14) connected in series with the first conductor (12) and a capacitor (16) which connects the inductance (14) to earth (11), thus forming a π-cell, the legs of the π being constituted by the lightning arrester and the capacitor, the inductance being connected between the lightning arrester and the capacitor, characterized in that the capacitance of the capacitor (16) is equal to the capacitance of the lightning arrester (10).

2. Protection device according to Claim 1, characterized in that the capacitance of the capacitor (16) of the said cell is adjustable.

3. Device according to either one of Claims 1 and 2, characterized in that it is constructed according to the microstrip technique.

4. Device according to either one of Claims 1 and 2, characterized in that it is constructed according to a triplate technique.

5. Device according to either one of Claims 1 and 2, characterized in that it is constructed according to a coaxial technique.

6. Device according to any one of Claims 1 to 5, characterized in that the breakdown voltage of the capacitor (16) is greater than the discharge voltage of the lightning arrester (10).

## Patentansprüche

1. Schutzeinrichtung gegen Überspannungen, enthaltend : einen Überspannungsableiter (10), der zwischen einem ersten Leiter (12) und Masse (11) angeordnet ist, eine Induktanz (14), die in Serie mit dem ersten Leiter (12) geschaltet ist, und einem Kondensator (16), der die Induktanz (14) mit Masse (11) verbindet und auf diese Weise ein π-Glied bildet, wobei die Beine des π von dem Überspannungsableiter und dem Kondensator gebildet sind und die Induktanz zwischen den Überspannungsableiter und den Kondensator geschaltet ist, dadurch gekennzeichnet, daß die Kapazität des Kondensators (116) ebenso groß ist, wie die Kapazität des Überspannungsableiters (10).

2. Schutzeinrichtung nach Anspruch 1, dadurch gekennzeichnet, daß die Kapazität des Kondensators (16) des π-Gliedes einstellbar ist.

3. Einrichtung nach einem der Ansprüche 1 und 2, dadurch gekennzeichnet, daß sie in Mikrostreifentechnik ausgeführt ist.

4. Einrichtung nach einem der Ansprüche 1 und 2, dadurch gekennzeichnet, daß sie in einer Dreischichttechnik ausgeführt ist.

5. Einrichtung nach einem der Ansprüche 1 und 2, dadurch gekennzeichnet, daß sie in einer Koaxialtechnik ausgeführt ist.

6. Einrichtung nach einem der Ansprüche 1 bis 5, dadurch gekennzeichnet, daß die Durchschlagspannung des Kondensators (16) höher als die Ansprechspannung des Überspannungsableiters (10) ist.

**FIG.1**

**FIG.2**

**FIG.4**

1

# FIG.3

Longueurs d'ondes vers la charge

Longueurs d'ondes vers le générateur